Europäisches Patentamt

European Patent Office

Office européen des brevets

(19)

(11) Numéro de publication : **0 007 867**
**B1**

(12) **FASCICULE DE BREVET EUROPÉEN**

(45) Date de publication du fascicule du brevet :
09.06.82

(51) Int. Cl.³ : **H 01 H 85/30**, H 01 H 59/00,
H 02 H 3/04

(21) Numéro de dépôt : **79400522.3**

(22) Date de dépôt : **20.07.79**

(54) **Perfectionnements aux dispositifs pour détecter la rupture d'un élément de circuit électrique.**

(30) Priorité : **25.07.78 FR 7822015**

(43) Date de publication de la demande :
**06.02.80 (Bulletin 80/03)**

(45) Mention de la délivrance du brevet :
**09.06.82 Bulletin 82/23**

(84) Etats contractants désignés :
**AT BE CH DE GB IT LU NL SE**

(56) Documents cités :
**DE A 2 053 554**
**FR A 1 286 873**
**FR A 2 218 640**
**FR A 2 294 535**

(73) Titulaire : **Lewiner, Jacques**
**5, rue Bory d'Arnex**
**F-92210 Saint-Cloud (FR)**

**Dreyfus, Gérard**
**Rue du Viaduc**
**Villebon S/Yvette F-91120 Palaiseau (FR)**

**Perino, Didier**
**10, rue de Bellevue**
**F-92150 Suresnes (FR)**

(72) Inventeur : **Lewiner, Jacques**
**5, rue Bory d'Arnex**
**F-92210 Saint-Cloud (FR)**
Inventeur : **Dreyfus, Gérard**
**Rue du Viaduc**
**Villebon S/Yvette F-91120 Palaiseau (FR)**
Inventeur : **Perino, Didier**
**10, rue de Bellevue**
**F-92150 Suresnes (FR)**

(74) Mandataire : **Behaghel, Pierre et al**
**CABINET PLASSERAUD 84 rue d'Amsterdam**
**F-75009 Paris (FR)**

Imprimerie Jouve, 18, rue St-Denis, 75001 Paris, France

Perfectionnements aux dispositifs pour détecter la rupture d'un élément de circuit électrique

L'invention est relative aux dispositifs destinés à détecter la rupture d'un élément de circuit électrique de faible résistance, de préférence d'un fusible, au cours de l'alimentation électrique de ce circuit.

Elle vise plus particulièrement, parmi ces dispositifs de détection, ceux qui comprennent des moyens pour élaborer une tension continue U dont l'amplitude varie dans le même sens que celle de la tension développée à chaque instant aux bornes de l'élément à surveiller et des moyens pour exploiter à des fins de signalisation ou autres les dépassements d'un seuil donné $U_0$ par cette tension U.

Elle a pour but, surtout, de rendre les dispositifs détecteurs du genre en question tels qu'ils répondent mieux que jusqu'à ce jour aux diverses exigences de la pratique, notamment en ce qu'ils ne consomment aucun courant électrique en provenance des circuits dont font partie les éléments à surveiller, en ce qu'ils peuvent être adaptés très simplement aux éléments de circuit habituels sans modification de ceux-ci et en ce qu'ils assurent les détections désirées avec une grande sécurité.

Les dispositifs détecteurs du genre en question selon l'invention sont essentiellement caractérisés en ce qu'ils comprennent deux électrodes formant condensateur, dont l'une est mobile par rapport à l'autre, un électret, disposé entre ces deux électrodes, dont la charge produit un champ exerçant sur lesdites électrodes une force électrostatique H tendant à les rapprocher mutuellement, des moyens pour appliquer entre les deux électrodes la tension U ci-dessus dans un sens tel que le champ qui en résulte s'oppose à celui dû à l'électret et tende donc à réduire la force H, et des moyens à effet « peu réversible » pour solliciter constamment l'électrode mobile en sens inverse de la force H, la force de sollicitation de ces derniers moyens et la charge de l'électret étant choisies de façon telle que le dépassement du seuil $U_0$ par la tension U provoque un basculement brusque de l'électrode mobile de sa position de repos à sa position d'alerte, et les moyens d'exploitation étant agencés de façon à être sensibles audit basculement.

Dans le brevet FR-A-2 294 535, dû à deux des auteurs de la présente invention, on a proposé d'incorporer un électret dans un condensateur formé par deux électrodes dont l'une est mobile par rapport à l'autre. Mais il n'est question dans ce brevet ni de détecter la rupture d'un élément de circuit électrique, ni d'avoir recours à des moyens de rappel à effet peu réversible.

Dans des modes de réalisation préférés, on a recours en outre à l'une et/ou à l'autre des dispositions suivantes :

— les moyens de sollicitation à effet peu réversible sont de type magnétique et constitués de préférence par un aimant permanent fixe et par une pièce en matière magnétique liée à l'électrode mobile,

— les moyens de sollicitation à effet peu réversible sont constitués par un mécanisme élastique à dépassement de point mort,

— les moyens de sollicitation à effet peu réversible sont constitués par un deuxième électret disposé de façon telle que l'électrode mobile vienne en contact avec lui à la fin d'un basculement,

— un organe manuel de réarmement est prévu pour replacer l'électrode mobile en sa position de repos initiale après basculement,

— le basculement de l'électrode mobile dû à un dépassement de tension à détecter se traduit par la fermeture d'un interrupteur électrique commandant un circuit d'alarme, de préférence visuel,

— les moyens d'élaboration de la tension continue U comprennent un diviseur de tension monté aux bornes de l'élément de circuit à surveiller, un pont redresseur, une capacité de filtrage, et éventuellement un limiteur de tension.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

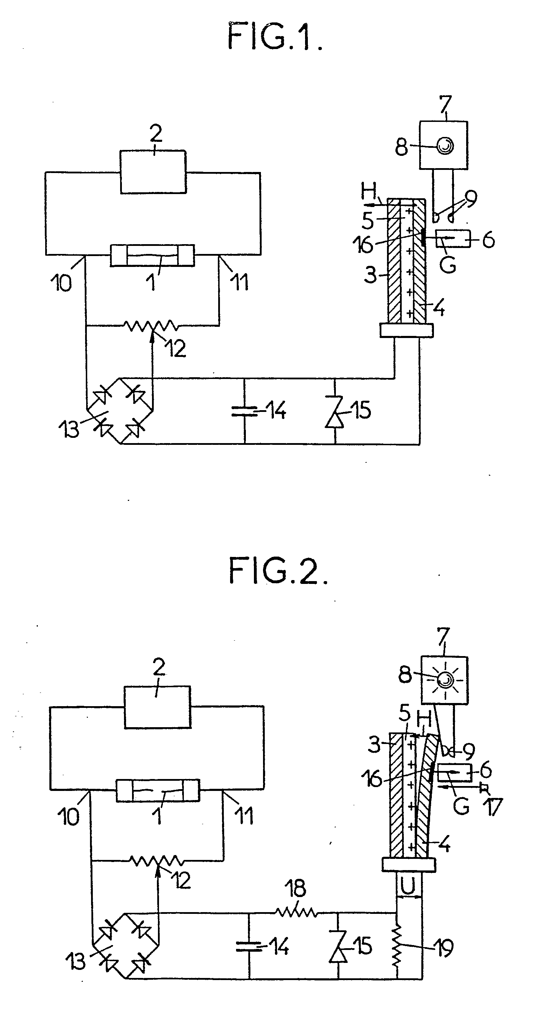

Les figures 1 et 2 de ce dessin montrent très schématiquement, respectivement en son état de veille ou repos et en son état d'alerte, un dispositif détecteur de rupture de fusible établi selon l'invention.

Le fusible en question, désigné par la référence 1, est destiné à protéger contre les surintensités un circuit électrique 2 et est à cet effet monté en série sur l'alimentation électrique de ce circuit.

Le détecteur de rupture de fusible 1 comprend :

— un condensateur formé de deux armatures ou électrodes conductrices parallèles, dont l'une, 3, est fixe et l'autre, 4, mobile, avec interposition d'un électret 5, c'est-à-dire d'une feuille diélectrique chargée électriquement, cet électret étant solidaire de l'électrode fixe 3,

— un organe 6 propre à solliciter constamment l'électrode mobile 4 hors de sa position de repos, selon la flèche G, avec un effet « peu réversible » tel que défini ci-après,

— et un circuit d'exploitation 7, notamment à voyant lumineux 8, comportant un interrupteur électrique de commande 9 actionnable réversiblement ɑ‘ ‘ les basculements de l'électrode mobile 4.

Les éɭ ɔdes 3 et 4 peuvent avoir diverses formes et natures, dépendant de la variable physique commandée (électrique, optique, pneumatique). Elles peuvent être grillagées, poreuses, massives, en couches minces obtenues par dépôt sous vide ou par procédé électrochimique, déposées sur des feuilles de polymère, tendues sur des cadres, etc.

L'électret 5 est avantageusement constitué par une feuille mince d'un polymère à base d'un polymère fluoré ou d'une polyoléfine substituée d'épaisseur comprise entre 1 micron et 1 cm.

La densité superficielle de ses charges peut être comprise entre $10^{-12}$ Cb/cm$^2$ et $10^{-4}$ Cb/cm$^2$.

Ces charges, symbolisées par le signe + sur le dessin, engendrent un champ qui exerce sur l'électrode mobile 4 une force électrostatique H tendant à la rapprocher de l'électrode fixe et donc de sens opposé à la force G.

Les deux électrodes 3 et 4 sont reliées électriquement aux deux bornes 10 et 11 du fusible 1 de façon telle que soit appliquée entre ces électrodes une tension continue U d'amplitude proportionnelle à celle développée entre ces bornes, et ce dans un sens tel que le champ qui en résulte s'oppose à celui produit par l'électret et tende donc à réduire la force H.

Cette liaison électrique peut être directe si la tension susceptible d'être développée aux bornes du fusible est continue et compatible avec la densité superficielle de charge de l'électret.

Sinon, et comme schématisé sur le dessin, ladite liaison est indirecte et assurée notamment à travers successivement un diviseur de tension 12, un pont redresseur 13, une capacité de filtrage 14, et éventuellement en outre un limiteur de tension tel qu'une diode Zener 15 en série avec une résistance 18 ou tel qu'un éclateur.

Par effet « peu réversible » qualifiant le mode de travail de l'organe 6, on entend ici un effet de type « avalanche », c'est-à-dire qui s'amplifie après son amorçage en supprimant dès lors toute hésitation.

Un simple ressort de rappel ne pourrait donc constituer cet organe 6.

Dans les modes de réalisation préférés, ledit organe 6 est constitué par un aimant permanent fixe propre à fermer son circuit magnétique à l'intérieur d'une armature 16 en matériau magnétique faisant partie de l'électrode mobile 4 ou rapportée sur cette dernière.

On sait en effet que l'attraction magnétique exercée par l'aimant 6 sur l'armature 16 est inversement proportionnelle au carré de la distance entre ces deux éléments : de ce fait, ladite attraction magnétique est relativement faible tant que l'électrode mobile 4 est appliquée contre l'électret 5, ce qui assure une bonne stabilité de l'ensemble à l'état de veille, notamment vis-à-vis des chocs.

Par contre, dès que l'électrode mobile 4 commence à s'écarter de l'électret 9, la sollicitation à l'écartement augmente rapidement, ce qui assure une commande franche du dispositif.

Enfin, la force d'attraction magnétique entre l'aimant et l'électrode mobile devient maximum en fin de course de cette dernière, ce qui assure un maintien ferme de celle-ci en sa position de fin de course ainsi que de l'interrupteur 9 en sa position commandée.

On fait remarquer que cet effet de basculement brusque de l'électrode mobile 4 est favorisé par le fait que les attractions électrostatiques exercées entre l'électrode mobile 4 et aussi bien l'électret 5 que l'électrode fixe sont, elles aussi, inversement proportionnelles au carré de la distance entre ladite électrode mobile et les deux dits éléments fixes.

On pourrait obtenir d'autres manières l'effet « peu réversible » défini ci-dessus.

Par exemple, l'organe de sollicitation 6 pourrait être constitué par un mécanisme élastique à dépassement de point mort attelé sur l'électrode mobile 4.

Ou encore, il pourrait être constitué par un second électret propre à recevoir l'électrode mobile 4 plaquée contre lui à la fin de sa course de basculement, la polarisation des charges de ce second électret étant la même que celle des charges du premier.

Selon encore une autre variante, et pour augmenter la force électrostatique due à l'intervention du second électret, on peut en prévoir un troisième directement rapporté sur la face, de l'électrode mobile 4, disposée en regard de ce second électret : dans ce cas, les polarités des charges portées respectivement par le second et par le troisième électret sont opposées.

L'électret 5 et l'organe de sollicitation 6 sont choisis de façon telle que l'électrode mobile 4, soumise à la résultante des deux forces d'attraction antagonistes G et H (réduite en fonction de la tension U), bascule de sa position de veille, représentée sur la figure 1, à sa position d'alerte, représentée sur la figure 2, lorsque la valeur de ladite tension U dépasse un seuil $U_o$ prédéterminé.

Dans le cas présent, la valeur de ce seuil $U_o$ peut être très approximative et choisie égale à n'importe laquelle de celles co-prises entre une valeur minimum $U_m$ correspondant à l'état intact du fusible 1 et une valeur maximum $U_M$ correspondant à la rupture de ce fusible.

Le fonctionnement du dispositif détecteur décrit ci-dessus est en effet le suivant.

A l'état de veille, le fusible 1 est intact et comme sa résistance est très faible, la différence de potentiel élaborée entre ses bornes 10 et 11 est elle-même très faible et même pratiquement nulle, ainsi donc que la tension $U_m$ obtenue par redressement à partir d'elle et appliquée entre les électrodes 3 et 4 et que la réduction qui en résulte de la force électrostatique H de « collage » des deux électrodes.

Dans ces conditions, cette force H demeure supérieure à la force d'attraction magnétique antagoniste G, due à l'aimant 6 : l'électrode 4 demeure donc plaquée contre l'électret 5, l'interrupteur 9 demeure ouvert et le voyant 8 est éteint (figure 1).

Si une surintensité apparaît dans le circuit 2, suffisante pour rompre le fusible 1, la différence de potentiel apparaissant aux bornes de celui-ci augmente brusquement pour devenir pratiquement égale à la tension d'alimentation de ce circuit.

Une tension continue $U_M$ relativement élevée est alors appliquée brusquement entre les électrodes 3 et 4.

Le champ qui résulte de cette tension $U_M$ réduit suffisamment la force électrostatique de maintien H due à l'électret pour que cette dernière devienne brusquement inférieure à la force magnétique antagoniste G de séparation exercée par l'aimant 6 : on observe alors un basculement brusque de l'électrode mobile 4 de sa position de veille à sa position d'alerte (figure 2), basculement exploité de façon à fermer l'interrupteur 9, ce qui allume le voyant 8.

En raison du caractère « peu réversible » de ce basculement brusque, cet état d'alerte demeure maintenu fermement jusqu'au remplacement du fusible 1.

Le simple remplacement de ce fusible ne suffit pas ensuite pour que le détecteur retourne en sa position de repos initiale : il faut en plus réarmer ce détecteur.

On a schématisé par le bouton-poussoir fléché 17 sur la figure 2 un tel système de réarmement, lequel peut être très simplement actionné par simple appui d'un doigt sur un bouton disposé en regard de l'électrode mobile ou par une commande électromagnétique.

Mais le réarmement en question pourrait être obtenu par d'autres moyens que mécaniques, par exemple en appliquant provisoirement aux bornes des électrodes 3 et 4 une tension continue d'amplitude suffisante et de sens opposé à la tension U ci-dessus, ou encore, si le dispositif comporte l'aimant 6 et l'armature 16 ci-dessus, en appliquant sur l'ensemble un champ magnétique suffisamment intense et de sens opposé à celui créé par l'aimant 6, ou en insérant une cale magnétique entre l'aimant 6 et l'armature 16, ce qui ferme le circuit magnétique correspondant par court-circuit : cette dernière formule assure non seulement le réarmement du dispositif détecteur, mais aussi sa neutralisation subséquente jusqu'au dégagement de la cale, ce qui peut être avantageux dans certains cas.

Pour faciliter au plan électrique le réarmement ci-dessus, il peut être avantageux de brancher entre les deux électrodes 3 et 4 une résistance 19 de valeur importante.

L'ensemble des électrodes 3, 4, de l'électret 5, de l'interrupteur 9 et de l'organe de sollicitation 6 peut être disposé dans une enceinte hermétique, soit évacuée, soit remplie d'un gaz neutre, éventuellement sous pression.

Une application particulièrement intéressante du détecteur ci-dessus est la surveillance simultanée de l'état d'une pluralité de fusibles.

Un tel détecteur est alors affecté à chaque fusible. Chacun de ces détecteurs peut être ensuite agencé de manière à exciter un circuit d'alarme individuel dans le cas où l'on désire pouvoir identifier instantanément les fusibles dont la rupture a été détectée.

Si au contraire, on désire simplement être informé de l'état rompu de l'un au moins des fusibles, il suffit d'exciter un seul et même circuit d'alarme à partir des différents interrupteurs 9 associés à ces fusibles.

Dans ce dernier cas, l'identification de chaque fusible rompu peut être ensuite facilement assurée par leur simple observation ou encore par l'examen des états fermés ou non des interrupteurs 9.

En suite de quoi, et quel que soit le mode de réalisation adopté, on obtient un détecteur de rupture de fusible dont la constitution et le fonctionnement résultent clairement de ce qui précède.

Ces détecteurs présentent un certain nombre d'avantages par rapport à ceux antérieurement connus : en particulier, ils ne consomment aucun courant électrique en provenance du circuit à protéger, aussi bien en leur état de veille qu'en leur état d'alerte, ils sont adaptables sur n'importe quel fusible sans modification de ce dernier et leur fonctionnement est particulièrement sûr vu que les positions de leurs électrodes mobiles correspondant respectivement aux deux états de veille et d'alerte sont remarquablement stables et non sensibles aux chocs.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

— celles où les éléments de circuit électrique dont la rupture fait l'objet de la détection seraient des conducteurs ou composants de faible résistance électrique autres que des fusibles, ce qui permettrait par exemple de détecter l'apparition de contacts défectueux, notamment dans des relais ou contacteurs,

— celles où les basculements de l'électrode mobile seraient exploités de façon à déclencher une autre commande que la fermeture d'un interrupteur électrique, notamment l'ouverture d'un tel interrupteur ou encore la déviation ou l'obturation d'un faisceau lumineux ou même l'obturation ou l'ouverture d'un orifice de passage d'un fluide,

— celles où la commande assurée par les basculements en question ne serait pas assurée directement mais ferait intervenir un dispositif amplificateur intermédiaire,

— celles où l'électret serait solidaire de l'électrode mobile au lieu de l'être de l'électrode fixe,

— celles où une cale isolante d'écartement serait interposée entre l'électret et l'électrode en regard dont il n'est pas solidaire, de façon à réduire les risques de décharge accidentelle de l'électret et d'en augmenter donc la durée de vie.

## Revendications

1. Dispositif pour détecter la rupture d'un élément de circuit électrique de faible résistance, de préférence d'un fusible, comprenant des moyens pour élaborer une tension continue U dont l'amplitude varie dans le même sens que celle développée à chaque instant aux bornes de l'élément à surveiller et des moyens pour exploiter à des fins de signalisation ou autres un dépassement d'un seuil donné $U_o$ par cette tension U, caractérisé en ce qu'il comprend deux électrodes (3, 4) formant condensateur, dont l'une (4) est mobile par rapport à l'autre, un électret (5) disposé entre ces deux électrodes, dont la charge produit un champ exerçant sur lesdites électrodes une force électrostatique H tendant à les rapprocher mutuellement, des moyens (2, 10-15, 18, 19) pour appliquer entre les deux électrodes la tension U dans un sens tel que le champ qui en résulte s'oppose à celui dû à l'électret et tende donc à réduire la force H, et des moyens (6, 16) à effet peu réversible pour solliciter constamment l'électrode mobile en sens inverse de la force H, la force (G) de ces derniers moyens et la charge de l'électret étant choisies de façon telle que le dépassement du seuil $U_o$ par la tension U provoque un basculement brusque de l'électrode mobile (4) de sa position de repos à sa position d'alerte, et les moyens d'exploitation (7) étant agencés de façon à être sensibles audit basculement.

2. Dispositif détecteur selon la revendication 1, caractérisé en ce que les moyens de sollicitation à effet peu réversible sont de type magnétique et constitués de préférence par un aimant permanent fixe (6) et par une pièce en matière magnétique (16) liée à l'électrode mobile.

3. Dispositif détecteur selon la revendication 1, caractérisé en ce que les moyens de sollicitation à effet peu réversible sont constitués par un mécanisme élastique à dépassement de point mort.

4. Dispositif détecteur selon la revendication 1, caractérisé en ce que les moyens de sollicitation à effet peu réversible sont constitués par un deuxième électret disposé de façon telle que l'électrode mobile vienne en contact avec lui à la fin d'un basculement.

5. Dispositif détecteur selon l'une quelconque des revendications précédentes, caractérisé en ce qu'il comprend un organe manuel de réarmement (17) pour replacer l'électrode mobile en sa position de repos initiale après basculement.

6. Dispositif détecteur selon la revendication 5, pour lequel les moyens de sollicitation à effet peu réversible sont de type magnétique, caractérisé en ce que le réarmement est assuré par courtcircuit magnétique.

7. Dispositif détecteur selon l'une quelconque des revendications précédentes, caractérisé en ce que le basculement de l'électrode mobile dû à un dépassement de tension à détecter se traduit par la fermeture d'un interrupteur électrique commandant un circuit d'alarme, de préférence visuel (8).

8. Dispositif détecteur selon l'une quelconque des revendications précédentes, caractérisé en ce que les moyens d'élaboration de la tension continue U comprennent un diviseur de tension (12) monté aux bornes (10, 11) de l'élément de circuit (1) à surveiller, un pont redresseur (13),

une capacité de filtrage (14), et éventuellement un limiteur de tension (15).

**Claims**

1. Device for detecting the rupture of an electrical circuit element of low resistance, preferably of a fuse, said device comprising means for forming a DC voltage U of which the amplitude varies in the same direction as that developed at each moment at the terminals of the element to be monitored and means for exploiting for signaling purposes or the like the overshoot of a given threshold $U_o$ by this voltage U, characterized in that it comprises two electrodes (3, 4) forming a capacitor, of which one (4) is movable with respect to the other, an electret (5) arranged between these two electrodes, whose charge produces a field exerting on said electrodes an electrostatic force H tending to bring them mutually together, means (2, 10-15, 18, 19) for applying between the two electrodes the voltage U in a direction such that the field which results therefrom is opposed to that due to electret and hence tends to reduce the force H, and means (6, 16) with scarcely reversible action for urging constantly the movable electrode in reverse direction to the force H, the force (G) of these latter means and the charge of the electret being selected so that the overshoots of the threshold $U_o$ cause a sudden swing of the movable electrode (4) from its monitoring position to its warning position, and the exploiting means (7) being arranged so as to be sensitive to said swing.

2. Detector device according to claim 1, characterized in that the urging means with scarcely reversible action are of the magnetic type and are preferably constituted by a fixed permanent magnet (6) and by a part of magnetic material (16) connected to the movable electrode.

3. Detector device according to claim 1, characterized in that the urging means with scarcely reversible action are constituted by an elastic mechanism with dead center overshoot.

4. Detector device according to claim 1, characterized in that the urging means with scarcely reversible action are constituted by a second electret arranged so that the movable electrode comes into contact with it at the end of a swing.

5. Detector device according to anyone of the preceding claims, characterized in that it comprises a manual resetting member (17) to replace the movable electrode into its monitoring position after swinging.

6. Detector device according to claim 5, for which the urging means with scarcely reversible action are of the magnetic type, characterized in that the resetting is ensured by a magnetic short circuit.

7. Detector device according to anyone of the preceding claims, characterized in that the swing of the movable electrode due to a voltage overshoot leads to the closing of an electrical switch actuating a warning circuit, preferably a visual one.

8. Detector device according to anyone of the preceding claims, characterized in that the means for forming the DC voltage U comprise a voltage divider (12) connected to the terminals (10, 11) of the circuit element (1) to be monitored, a rectifying bridge (13), a filtering capacitor (14) and, if necessary a voltage limiter (15).

**Ansprüche**

1. Vorrichtung zur Feststellung der Unterbrechung eines Elements mit niedrigem Widerstand eines elektrischen Schaltkreises, vorzugsweise einer Schmelzsicherung, umfassend Einrichtungen zur Erzeugung einer Gleichspannung U, deren Amplitude sich in der gleichen Richtung ändert als jene in jedem Augenblick an den Anschlüssen des zu überwachenden Elements anliegende Spannung, und Einrichtung zum dementsprechenden Ingangsetzen einer Anzeigeeinrichtung od. dgl. beim Überschreiten einer vorgegebenen Schwellspannung $U_o$ durch die Spannung U, dadurch gekennzeichnet, daß sie zwei einen Kondensator bildende Elektroden (3, 4) umfaßt, deren eine (4) bezüglich der anderen beweglich ist, ein zwischen den beiden Elektroden angeordnetes Elektret (5), dessen Ladung ein Feld bewirkt, das auf die Elektroden eine elektrostatische Kraft H in Richtung einer gegenseitigen Anziehung ausübt, Einrichtungen (2, 10 bis 15, 18, 19) zum Anlegen der Spannung U zwischen den beiden Elektroden mit einer derartigen Orientierung, daß das entstehende Feld demjenigen aufgrund des Elektrets entgegengerichtet ist und dement sprechend auf eine Verminderung der Kraft H hinwirkt, und Einrichtungen (6, 16) mit schwach umsteuerbarer Wirkung zur Erzeugung einer Vorspannung zur ständigen Beaufschlagung der beweglichen Elektrode in Richtung entgegengesetzt zur Kraft H, wobei die Kraft G der letztgenannten Einrichtungen und die Ladung des Elektrets so gewählt sind, daß die Überschreitung der Schwellspannung $U_o$ durch die Spannung U eine plötzliche Verschwenkung der beweglichen Elektrode (4) aus ihrer Ruhelage in eine Aktivlage hervorruft, und Anzeigeeinrichtungen (7) der Art, daß sie auf diese Verschwenkung reagieren.

2. Vorrichtung zur Feststellung der Unterbrechung eines Elements mit niedrigem Widerstand eines elektrischen Schaltkreises nach Anspruch 1, dadurch gekennzeichnet, daß die Einrichtungen mit schwach umsteuerbarer Wirkung zur Beaufschlagung mit einer Vorspannung magnetischer Art sind und vorzugsweise aus einem festen Permanentmagneten (6) und einem Teil aus magnetischem Werkstoff (16) bestehen, welches mit der beweglichen Elektrode verbunden ist.

3. Vorrichtung zur Feststellung der Unterbrechung eines Elements mit niedrigem Widerstand eines elektrischen Schaltkreises nach Anspruch 1, dadurch gekennzeichnet, daß die Einrichtungen mit schwach umsteuerbarer Wirkung zur Beaufschlagung mit einer Vorspannung aus einer elastischen Einrichtung besteht, deren Totpunktlage überschritten werden kann.

4. Vorrichtung zur Feststellung der Unterbrechung eines Elements mit niedrigem Widerstand eines elektrischen Schaltkreises nach Anspruch 1, dadurch gekennzeichnet, daß die Einrichtungen mit schwach umsteuerbarer Wirkung zur Beaufschlagung mit einer Vorspannung aus einem zweiten Elektret bestehen, welches derart angeordnet ist, daß die bewegliche Elektrode am Ende ihrer Schwenkbewegung mit diesem in Kontakt kommt.

5. Vorrichtung zur Feststellung der Unterbrechung eines Elements mit niedrigem Widerstand eines elektrischen Schaltkreises nach einem der vorstehenden Ansprüche, dadurch gekennzeichnet, daß sie eine manuelle Wiedereinschalteinrichtung (17) zum Zurückstellen der beweglichen Elektrode in ihre ursprüngliche Ruhelage nach Ausführung der Schwenkbewegung umfaßt.

6. Vorrichtung zur Feststellung der Unterbrechung eines Elements mit niedrigem Widerstand eines elektrischen Schaltkreises nach Anspruch 5, bei welcher die Einrichtungen mit schwach umsteuerbarer Wirkung zur Beaufschlagung mit einer Vorspannung magnetischer Art sind, dadurch gekennzeichnet, daß die Rückstellung durch magnetischen Kurzschluß bewerkstelligt wird.

7. Vorrichtung zur Feststellung der Unterbrechung eines Elements mit niedrigem Widerstand eines elektrischen Schaltkreises nach einem der vorstehenden Ansprüche, dadurch gekennzeichnet, daß die Schwenkbewegung der beweglichen Elektrode aufgrund des Überschreitens durch die zu überwachende Spannung durch das Schließen eines elektrischen Unterbrechers einen Alarmkreis in Gang setzt, vorzugsweise eine visuelle Alarmeinrichtung (8).

8. Vorrichtung zur Feststellung der Unterbrechung eines Elements mit niedrigem Widerstand eines elektrischen Schaltkreises nach einem der vorstehenden Ansprüche, dadurch gekennzeichnet, daß die Einrichtungen zur Erzeugung der Gleichspannung U einen Spannungsteiler (12) an den Anschlüssen (10, 11) des zu überwachenden Stromkreiselements (1), eine Gleichrichtereinrichtung (13), eine Filterkapazität (14) und gegebenenfalls eine Spannungsbegrenzungseinrichtung (15) umfaßt.

## FIG.1.

## FIG.2.

1